# EUROPÄISCHE PATENTSCHRIFT

(11) **EP 2 715 849 B1**
(45) Veröffentlichungstag und Bekanntmachung des Hinweises auf die Patenterteilung: **08.07.2015**
(21) Anmeldenummer: 12719598.0
(22) Anmeldetag: 04.05.2012
(51) Int. Cl.: H01M 8/04, B01D 5/00

(54) **REZIRKULATIONSEINRICHTUNG FÜR EIN BRENNSTOFFZELLENSYSTEM**
REZIRKULATION DEVICE FOR A FUEL CELL SYSTEM
DISPOSITIF DE RECIRCULATION POUR UN SYSTÈME DE PILA À COMBUSTIBLE

(30) Priorität: 25.05.2011 DE 102011102336
(43) Veröffentlichungstag der Anmeldung: 09.04.2014
(73) Patentinhaber: Daimler AG, 70327 Stuttgart (DE)
(72) Erfinder: MÜTSCHELE, Armin, 73235 Weilheim an der Teck (DE)
(74) Vertreter: JENSEN & SON
(86) Internationale Anmeldenummer: PCT/EP2012/001934
(87) Internationale Veröffentlichungsnummer: WO 2012/159705

(56) Entgegenhaltungen:
- WO-A1-2008/052578
- JP-A- 2004 241 169
- JP-A- 2005 327 655

## Beschreibung

Die Erfindung betrifft eine Rezirkulationseinrichtung für ein Brennstoffzellensystem nach der im Oberbegriff von Patentanspruch 1 näher definierten Art.

Brennstoffzellensysteme, welche mit gasförmigen Edukten, wie zum Beispiel Luft und Wasserstoff oder wasserstoffhaltigem Gas, betrieben werden, sind aus dem allgemeinen Stand der Technik bekannt. Sie weisen im Allgemeinen wenigstens eine Brennstoffzelle mit einem Anodenbereich und einem Kathodenbereich auf. Typischerweise ist die Brennstoffzelle als Stapel von einzelnen Brennstoffzellen ausgebildet und wird als Brennstoffzellenstack bezeichnet. Bei derartigen Brennstoffzellen, und insbesondere bei solchen, welche in PEM-Technologie ausgeführt sind, wird häufig das Abgas aus dem Anodenbereich gesammelt und zusammen mit frischem Gas, insbesondere frischem Wasserstoff, dem Anodenbereich erneut zugeführt. Hierfür ist dann eine Rezirkulationseinrichtung notwendig.

In der gattungsgemäßen WO 2008/052578 A1 ist unter der Bezeichnung "Brennstoffkreis" eine derartige Rezirkulationseinrichtung beschrieben. Bei dieser Rezirkulationseinrichtung ist es so, dass Abgas aus dem Anodenbereich der Brennstoffzelle über einen Flüssigkeitsabscheider geführt und mit frischem zu der Brennstoffzelle strömendem Gas vermischt dem Anodenbereich wieder zugeführt wird. Um die Druckverluste im Bereich der Rezirkulationsleitung und des Anodenbereichs auszugleichen, kann eine Rezirkulationsfördereinrichtung vorgesehen sein. Diese ist im allgemeinen Stand der Technik bekannt und wird typischerweise als Gebläse und/oder Gasstrahlpumpe bzw. Jetpump ausgeführt.

Nun ist es so, dass sich in dem zum Eingang des Anodenbereichs zurückgeführten Abgasstrom mit der Zeit inerte Gase und Wasser anreichern. Dieses Wasser wird über den Flüssigkeitsabscheider aus dem Gasstrom abgeschieden, um ein "Fluten" des Anodenbereichs mit dem Wasser zu verhindern. Die inerten Gase, insbesondere Stickstoff, welcher durch die Membranen der Brennstoffzelle aus dem Kathodenbereich in den Anodenbereich diffundiert, reichert sich mit der Zeit in der Rezirkulationseinrichtung an. Die Wasserstoffkonzentration fällt damit ab. Um eine gute Performance der Brennstoffzelle zu gewährleisten, muss daher von Zeit zu Zeit Wasser und inertes Gas aus dem Kreislauf der Rezirkulationseinrichtung abgelassen werden.

Die WO 2008/052578 A1 beschreibt hierzu ein Ablassventil in einer Ablassleitung aus dem Flüssigkeitsabscheider. Dieses kann beispielsweise in Abhängigkeit von Füllstandssensoren beziehungsweise Levelsensoren in dem Flüssigkeitsabscheider angesteuert werden. Ziel ist es dabei immer, das Wasser vollständig aus dem Bereich des Kreislaufs zu entfernen und danach die Inertgase vollständig abzulassen, ohne allzu viel Wasserstoff an die Umgebung abzugeben.

Es hat sich nun gezeigt, dass die Füllstandssensoren, welche typischerweise kapazitiv ausgebildet sind, sehr stark zum Verschmutzen neigen und damit in ihrer Funktionalität sehr unzuverlässig sind.

In der Praxis wird das Ablassventil daher sehr häufig zeitgesteuert betrieben, beispielsweise um von Zeit zu Zeit geöffnet zu werden und nach einer gewissen Zeit wieder geschlossen zu werden. Die Zeiten sind dabei durch Kennfelder oder Experimente so ausgelegt, dass das Wasser vollkommen entfernt wird und in jedem Fall das gesamte Inertgas entfernt wird, ohne dabei allzu viel Wasserstoff abzugeben. Da die Brennstoffzelle bei unterschiedlichen Lastzuständen betrieben werden kann, und insbesondere beim Einsatz in einem Fahrzeug typischerweise sehr dynamisch betrieben wird, ist die Menge an anfallendem Wasser, welches in Abhängigkeit der Leistung und des verbrauchten Wasserstoffs in dem Anodenbereich anfällt, häufig sehr stark schwankend. Damit ergeben sich bei einer reinen Zeitsteuerung häufig Probleme durch zuviel Wasser in dem Kreislauf der Rezirkulationseinrichtung. Da flüssiges Wasser, wenn es in den Anodenbereich eindringt, die aktive Fläche des Anodenbereichs blockieren kann, ist dies für die Performance der Brennstoffzelle sehr nachteilig. Die Zeitsteuerung ist daher in jedem Fall so ausgelegt, dass das flüssige Wasser immer vollständig entfernt wird. Insbesondere im Teillastbetrieb sind die Zeitspannen dann aber so lange, dass zusätzlich eine vergleichsweise große Menge an Wasserstoff verloren geht, was unerwünscht ist.

Eine weitere Möglichkeit zur Verbesserung des Schaltens des Ablassventils besteht darin, die anfallende Wassermenge vorauszuberechnen, indem die bei der jeweils anfallenden Leistung erzeugte Wassermenge im Anodenbereich vorausbestimmt und aufaddiert wird. Sobald sich in dem Kreislauf der Rezirkulationseinrichtung eine entsprechende Wassermenge angesammelt hat, wird dann das Ablassventil für eine dieser Wassermenge entsprechende Zeit geöffnet. Dies verbessert die Funktionalität gegenüber einer reinen zeitgesteuerten Öffnung des Ablassventils. Allerdings sind immer noch Schwankungen und Ungenauigkeiten gegeben, sodass auch hier mehr Wasserstoff verloren geht, als gewünscht ist, da aus denselben Gründen, wie oben beschrieben, immer eine gewisse Sicherheit bei der Öffnungszeit vorgehalten werden muss, um in jedem Fall das gesamte Wasser aus dem Bereich der Rezirkulationseinrichtung abzulassen.

Weitere Möglichkeiten zur Verbesserung der Steuerung bestehen typischerweise darin, Wasserstoffsensoren in ihrer Ablassleitung nach der Ventileinrichtung anzuordnen. Diese sind jedoch vergleichsweise aufwändig, störanfällig und teuer.

Eine weitere Möglichkeit ist in der deutschen Anmeldung DE 10 2009 036 197 A1 beschrieben. Hierbei wird auf einen Wasserstoffsensor verzichtet und stattdessen der abgelassene Medienstrom in den Bereich der Kathode bzw. der zur Kathode strömenden Zuluft geleitet. Kommt Wasserstoff im Bereich der Kathode an, so führt dies zu einem Spannungseinbruch der Brennstoffzelle, welcher insbesondere in Teillast zu erkennen ist. Dieses Ankommen von Wasserstoff auf der Kathodenseite zeigt dann, dass Wasser und Inertgase abgelassen sind. Das Ablassventil kann entsprechend geschlossen werden.

Auch dieses Verfahren hat den entscheidenden Nachteil, dass hier deutlich mehr Wasserstoff verloren geht, als notwendig ist, da der Wasserstoff zuerst die Leitungslänge zwischen dem Ablassventil und dem Kathodenbereich überwinden muss und erst dann detektiert werden kann. Der in dieser Leitungslänge befindliche Wasserstoff geht daher bei jedem Ablassvorgang unweigerlich ungenutzt verloren.

Die Aufgabe der hier vorliegenden Erfindung besteht nun darin, eine Rezirkulationseinrichtung für ein Brennstoffzellensystem anzugeben, welche sicher und zuverlässig arbeitet, und dabei einfach und effizient aufgebaut ist. Außerdem soll ein Verfahren zum Ablassen von Flüssigkeit und/oder Gasen aus einer solchen Rezirkulationseinrichtung angegeben werden, welches die Verluste an Wasserstoff minimiert.

Erfindungsgemäß wird diese Aufgabe durch die im kennzeichnenden Teil des Vorrichtungsanspruchs 1 genannten Merkmale gelöst. Vorteilhafte Weiterbildungen der Vorrichtung ergeben sich aus den hiervon abhängigen Unteransprüchen. Außerdem löst ein Verfahren zum Ablassen von Flüssigkeit und/oder Gas aus einer solchen Rezirkulationseinrichtung mit den Merkmalen im kennzeichnenden Teil des Anspruchs 5 die Aufgabe. Vorteilhafte Ausgestaltungen des Verfahrens ergeben sich aus den hiervon abhängigen Unteransprüchen. Letztlich ist im Anspruch 10 außerdem eine Verwendung einer derartigen Rezirkulationseinrichtung oder eines solchen Verfahrens angegeben.

Die erfindungsgemäße Rezirkulationseinrichtung für ein Brennstoffzellensystem umfasst zwingend eine Rezirkulationsleitung, welche den Ausgang des Anodenbereichs der Brennstoffzelle mit dessen Eingang verbindet. Im Bereich dieser Rezirkulationsleitung ist ein Flüssigkeitsabscheider angeordnet, welcher eine Ablassleitung mit einem Ablassventil für Flüssigkeit und/oder Gas aufweist. Erfindungsgemäß ist im Bereich der Ablassleitung ein Blasensensor zur Steuerung des Ablassventils angeordnet. Über einen solchen Blasensensor kann einfach und sehr effizient zwischen in der Ablassleitung strömender Flüssigkeit und in der Ablassleitung strömendem Gas unterschieden werden. Über einen solchen Blasensensor kann damit die Grenze zwischen der strömenden Flüssigkeit und dem dieser folgenden Gas erfasst und detektiert werden. Dies kann zur Ansteuerung des Ablassventils verwendet werden. Der Sensor kann dabei insbesondere berührungslos ausgebildet werden, vorzugsweise als Ultraschallsensor, als optischer Sensor oder dergleichen. Ein derartiger Blasensensor ist mit hoher Zuverlässigkeit und hoher Auflösung am Markt kostengünstig verfügbar, sodass ein einfaches, zuverlässiges und kostengünstiges Realisieren der Rezirkulationseinrichtung für das Brennstoffzellensystem möglich wird.

Der Blasensensor kann dabei gemäß einer besonders günstigen und vorteilhaften Weiterbildung der erfindungsgemäßen Rezirkulationseinrichtung im Bereich der Ablassleitung in Strömungsrichtung des abgelassenen Volumenstroms nach dem Ablassventil angeordnet sein. Insbesondere in diesem Bereich nach dem Ablassventil, kann der entscheidende Übergang von Flüssigkeit auf Gas detektiert werden, was dann zum Schließen des Ablassventils und zum Beenden des Ablassvorgangs führt. Damit lässt sich die Menge an Wasserstoff, welche beim Ablassen mit abgelassen wird, entsprechend minimieren.

Wie bereits erwähnt, kann der Blasensensor dabei vorzugsweise als berührungsloser Blasensensor ausgebildet sein. Dies führt zu einem einfachen und effizienten Aufbau, welcher hinsichtlich Verschmutzung sehr günstig ist, da der Blasensensor typischerweise die Ablassleitung lediglich von außen umgibt und damit mit dem in der Ablassleitung strömenden Medium nicht in Berührung kommt. Eine Verschmutzung durch dieses Medium ist damit ausgeschlossen, der Blasensensor funktioniert ohne diese Verschmutzung sicher und zuverlässig, entgegen den aus dem Stand der Technik bekannten in dem Volumenstrom angeordneten kapazitiven Füllstandssensoren.

Das erfindungsgemäße Verfahren sieht es vor, dass das Ablassventil geöffnet und dann in Abhängigkeit eines von dem Blasensensor detektierten Ereignisses wieder geschlossen wird.

Gemäß dem erfindungsgemäßen Verfahren ist es also vorgesehen, dass das Ablassventil gemäß einer beliebigen Strategie, wie sie beispielsweise aus dem Stand der Technik bekannt ist, geöffnet wird. Dies kann beispielsweise eine zeitgesteuerte Öffnung sein, es kann alternativ dazu selbstverständlich auch eine Öffnung anhand einer vorausberechneten Wassermenge in der Rezirkulationseinrichtung sein, oder auch anhand einer Kennlinie beispielsweise zwischen der Leistung, welche von der Brennstoffzelle abgegeben wird, und einem für die über den jeweiligen Zeitraum gemittelte oder aufsummierte Leistung typische Zeitspanne. Wenn das Ablassventil in dieser an sich bekannten Art geöffnet ist, bleibt es so lange geöffnet, bis der Blasensensor ein entsprechendes Ereignis detektiert, aufgrund dessen es dann wieder geschlossen wird.

In einer besonders günstigen und vorteilhaften Weiterbildung des erfindungsgemäßen Verfahrens ist es dabei vorgesehen, dass der Blasensensor so kalibriert wird, dass er den Übergang zwischen der abgelassenen Flüssigkeit und dem dieser folgenden abgelassenen Gas detektiert. Ein solches Ereignis, welches anzeigt, dass die Flüssigkeit vollständig abgelassen ist, wird dann genutzt um das Ablassventil wieder zu schließen. Je nach Position des Blasensensors, vorzugsweise in Strömungsrichtung unmittelbar nach oder um eine gewisse Wegstrecke in Strömungsrichtung des Volumenstroms nach dem Ablassventil, wird erreicht, dass das Ablassventil in jedem Fall erst geschlossen wird, wenn im Bereich des Blasensensors das Gas angekommen ist, und somit die Flüssigkeit aus dem Flüssigkeitsabscheider vollständig abgelassen worden ist. Das Schließen des Ablassventils kann dann entweder direkt erfolgen, was insbesondere bei einer entsprechenden Wegstrecke zwischen dem Ablassventil und dem Blasensensor von Vorteil ist, oder es kann entsprechend zeitverzögert geschlossen werden, was insbesondere dann von Vorteil ist, wenn der Blasesensor unmittelbar nach dem Ablassventil angeordnet ist. So kann immer sichergestellt werden, dass eine gewisse Menge an Gas mit abgelassen wird, sodass die Inertgase zusätzlich zu dem abgelassenen Wasser sicher und zuverlässig aus der Rezirkulationseinrichtung entfernt worden sind.

Bei dem beschriebenen Aufbau bestimmt dabei die vorgegebene Zeitspanne und/oder die Wegstrecke zwischen dem Blasensensor und dem Ablassventil maßgeblich die Menge an abgelassenem Gas und damit gegebenenfalls auch die Menge an verschwendetem Wasserstoff. Um diese zu minimieren ist es in einer besonders günstigen und vorteilhaften Weiterbildung des erfindungsgemäßen Aufbaus vorgesehen, dass bei bekannter oder gemessener Druckdifferenz über dem Ablassventil und bekanntem Strömungsquerschnitt im Bereich des Ablassventils aus der Zeitdauer zwischen dem Öffnen des Ablassventils und der Detektion von Gas im Bereich des Blasensensors sowie gegebenenfalls der Wegstrecke der Strömung zwischen Ablassventil und Blasensensor, die abgelassene Flüssigkeitsmenge ermittelt wird, wobei eine in Abhängigkeit der abgelassenen Flüssigkeitsmenge vorgegebene Zeit bis zum Schließen des Ablassventils abgewartet wird. Da die real angefallene Flüssigkeitsmenge immer in Abhängigkeit der aktuellen Betriebsbedingungen der Brennstoffzelle und insbesondere der von ihr abgerufenen Leistung abhängt, hängt von der abgelassenen Flüssigkeitsmenge auch die Menge an in der Rezirkulationseinrichtung angefallenem Inertgas ab. Wird die vorgegebene Zeit zwischen der Detektion des Gases in der Ablassleitung und dem Schließen des Ablassventils nun in Abhängigkeit der abgelassenen Flüssigkeitsmenge festgelegt, beispielsweise durch eine Kennlinie, so kann sicher und zuverlässig immer die gesamte Inertgasmenge abgelassen werden, ohne dass mehr Wasserstoff als unbedingt notwendig entweicht.

Die erfindungsgemäße Rezirkulationseinrichtung sowie das Verfahren zum Ablassen von Flüssigkeit und/oder Gasen ist sehr effizient, zuverlässig und kann einfach und kostengünstig realisiert und umgesetzt werden. Die Rezirkulationseinrichtung und das Verfahren sind daher besonders gut geeignet, um in Brennstoffzellensystemen eingesetzt zu werden, welche in einem Kraftfahrzeug elektrische Leistung, insbesondere für Antriebszwecke, erzeugen.

Insbesondere bei Fahrzeuganwendungen und den damit verbundenen Stückzahlen ist der einfache und kostengünstige Aufbau von entscheidender Bedeutung. Ebenso ist eine zuverlässige Funktionalität entscheidend, um Reparaturen und Wartungen auf ein Minimum zu begrenzen und möglichst lange Wartungsintervalle für die Kraftfahrzeuge realisieren zu können.

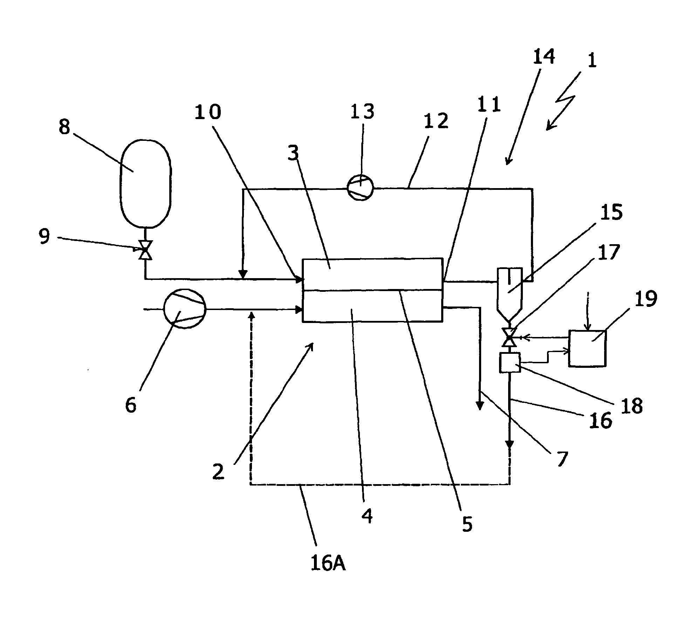

Weitere vorteilhafte Ausgestaltungen der erfindungsgemäßen Rezirkulationseinrichtung sowie des erfindungsgemäßen Verfahrens zum Ablassen von Flüssigkeit und/oder Gasen aus einer solchen Rezirkulationseinrichtung ergeben sich aus dem Ausführungsbeispiel, welches nachfolgend unter Bezugnahme auf die Figur näher beschrieben ist.

In der einzigen beigefügten Figur ist ein Brennstoffzellensystem bzw. der für die Erfindung notwendigen Teil eines solchen Brennstoffzellensystems prinzipmäßig angedeutet.

Aus der Darstellung in der Figur ist ein prinzipmäßig angedeutetes Brennstoffzellensystem 1 zu erkennen. Der Kern dieses Brennstoffzellensystems 1 ist eine Brennstoffzelle 2, welche als Stapel von einzelnen Brennstoffzellen, als sogenannter Brennstoffzellenstack, ausgebildet ist. Die Brennstoffzelle 2 umfasst einen Anodenbereich 3 und einen Kathodenbereich 4, welche durch eine protonenleitende Membran 5 voneinander getrennt sind. Bei der Brennstoffzelle 2 handelt es sich demnach um eine PEM-Brennstoffzelle. Dem Kathodenbereich 4 der Brennstoffzelle 2 wird über eine Luftfördereinrichtung 6 gefilterte Luft als sauerstoffhaltiges Medium zugeführt. Verbrauchte Abluft gelangt über eine Abluftleitung 7 aus dem Brennstoffzellensystem 1. Diese kann beispielsweise an die Umgebung abgegeben, über eine Turbine entspannt und/oder einer Verbrennung zugeführt werden. Dies ist für die Erfindung jedoch unerheblich.

Dem Anodenbereich 3 der Brennstoffzelle 2 wird Wasserstoff aus einem Druckgasspeicher 8 und über eine Ventil- und Druckregeleinrichtung 9 zugeführt. Der frische Wasserstoff strömt über eine Zuleitung zum Eingang 10 des Anodenbereichs 3 und wird in dem Anodenbereich 3 teilweise mit dem Sauerstoff aus dem Kathodenbereich 4 zu elektrischer Energie und Produktwasser umgesetzt. Der nicht umgesetzte Wasserstoff gelangt über einen Ausgang 11 des Anodenbereichs 3 in eine Rezirkulationsleitung 12, durch welche er über eine Rezirkulationsfördereinrichtung 13 in den Bereich des frischen zum Eingang 10 des Anodenbereichs 3 strömenden Gasstrom eingebracht wird. Die Rezirkulationsfördereinrichtung 13 kann dabei in an sich bekannter Art und Weise als Rezirkulationsgebläse und/oder als eine oder mehrere Gasstrahlpumpen, welche typischerweise von dem frischen aus dem Druckgasspeicher 8 stammenden Gasstrom angetrieben werden, ausgebildet sein. Neben der Rezirkulationsleitung 12 sowie der Rezirkulationsfördereinrichtung 13 umfasst eine Rezirkulationseinrichtung 14 für das Brennstoffzellensystem 1 außerdem einen Flüssigkeitsabscheider 15 im Bereich der Rezirkulationsleitung 12. Dieser Flüssigkeitsabscheider 15 dient zum Abscheiden von Flüssigkeit, insbesondere von Produktwasser in dem Gasstrom der Rezirkulationseinrichtung 14. Das abgeschiedene Wasser sammelt sich in dem Flüssigkeitsabscheider 15 und wird über eine Ablassleitung 16 mit einem Ablassventil 17 von Zeit zu Zeit abgelassen, um den Flüssigkeitsabscheider 15 zu leeren und um Inertgase abzublasen, welche sich im Bereich der Rezirkulationseinrichtung 14 um den Anodenbereich 3 mit der Zeit ansammeln. Die Ablassleitung 16 führt das abgelassene Wasser und/oder die abgelassenen Gase dabei entweder in die Umgebung oder, wie durch den gestrichelt dargestellten Teil 16A der Ablassleitung 16 dargestellt, in den Bereich der zu dem Kathodenbereich 4 strömenden Luft.

Die Rezirkulationseinrichtung 14 weist im Bereich der Ablassleitung 16 außerdem einen Blasensensor 18 sowie eine Steuerungselektronik 19 zur Auswertung der Signale des Blasensensors 18 und zum Ansteuern des Ablassventils 17 auf. Das Ablassventil 17 ist dabei als reines Auf/Zu-Ventil ausgebildet und kann vorzugsweise als Magnetventil realisiert werden. Es kann über die Steuerung 19 entsprechend angesteuert werden, um das Wasser und die inerten Gase aus dem Bereich der Rezirkulationsleitung 12 abzulassen. Das Öffnen des Ablassventils 17 kann dabei in an sich bekannter Art und Weise erfolgen. Insbesondere kann das Öffnen des Ablassventils 17 zeitgesteuert erfolgen, also jeweils nach einer vorgegebenen Zeitspanne seit dem letzten Öffnen. Alternativ oder ergänzend dazu kann das Öffnen auch dadurch ausgelöst werden, dass die von der Brennstoffzelle 2 abgegebene Leistung aufintegriert wird und immer, nachdem eine gewisse Arbeit von der Brennstoffzelle erzeugt worden ist, das Ablassventil 17 geöffnet wird. Eine weitere Möglichkeit besteht darin, das Ablassventil 17 in Abhängigkeit einer prognostizierten Wassermenge, welche im Bereich der Rezirkulationsleitung und des Anodenbereichs und damit letztlich im Bereich des Flüssigkeitsabscheiders 15 angefallen ist, zu öffnen. Diese Menge kann beispielsweise in Abhängigkeit der Leistung der Brennstoffzelle entsprechend berechnet beziehungsweise abgeschätzt werden, sodass das Ablassventil 17 immer dann geöffnet werden kann, wenn prognostiziert bzw. vorausberechnet ist, dass der Flüssigkeitsabscheider 15 - beispielsweise zu zwei Dritteln - gefüllt ist. Alternative aus dem Stand der Technik ebenfalls bekannte Möglichkeiten zum Generieren eines Signals zum Öffnen des Ablassventils 17 sind ebenso denkbar und möglich.

Das Schließen des Ablassventils 17 erfolgt dann aufgrund eines von dem Blasensensor 18 detektierten Ereignisses. Der Blasensensor 18 soll insbesondere als berührungsloser Blasensensor, vorzugsweise als Ultraschall-Blasensensor, ausgebildet sein. Ein solcher Ultraschallblasensensor 18 kann um die Ablassleitung herum angeordnet werden, ohne dass diese hierfür unterbrochen werden müsste. Der Blasensensor 18 kann durch die Wandung der Ablassleitung 16 hindurch berührungslos eventuelle Blasen in dem abgelassenen Medienstrom erfassen. Hierfür ist keine Verbindung zwischen dem Blasensensor 18 und dem Inneren der Ablassleitung 16 notwendig. Der Blasensensor 18 kann daher durch das in der Ablassleitung 16 strömende Medium nicht verschmutzt werden. Blasensensoren 18 können sehr sensibel eingestellt werden, um beispielsweise minimale Blasengrößen in einem Flüssigkeitsstrom zu erkennen. Der Blasensensor 18 in dem hier vorliegenden Aufbau der Rezirkulationseinrichtung 14 soll dabei so kalibriert werden, dass dieser einen Übergang zwischen dem Wasser aus dem Flüssigkeitsabscheider 15 und dem diesem Wasser folgenden Inertgas erkennt. Der Blasensensor 18 gibt also immer dann ein Ereignis aus, wenn die gesamte Menge an Wasser beziehungsweise Flüssigkeit ihn passiert hat und auf das Wasser folgend Gas, und hier insbesondere Inertgas, durch die Ablassleitung 16 strömt. Dieses Ereignis wird dann durch die Steuerung 19 entsprechend ausgewertet und kann entweder direkt oder zeitverzögert zum Schließen des Ablassventils 17 genutzt werden.

Das Ziel beim Schließen des Ablassventils 17 besteht immer darin, die gesamte Menge an Wasser abzulassen und darüber hinaus zusätzlich die in der Rezirkulationsleitung 12 und dem Anodenbereich 3 angesammelten Inertgase, ohne dass Wasserstoff bzw. mehr Wasserstoff als unbedingt notwendig, an die Umgebung bzw. in den Zuluftstrom zum Kathodenbereich 4 gelangt.

In einer ersten sehr einfachen Ausführungsform der Erfindung kann dies dadurch erreicht werden, dass das Ablassventil 17 immer dann geschlossen wird, wenn der Übergang von der Flüssigkeit zum Gas durch den Blasensensor 18 detektiert worden ist. Je nach Position des Blasensensors 18, welcher vorzugsweise direkt oder um eine kleine Wegstrecke in Strömungsrichtung nach dem Ablassventil 17 angeordnet ist, ist dann immer auch bereits eine gewisse Menge an Gas, und hier vorzugsweise die typischerweise anfallende Menge an Inertgas, durch das Ablassventil 17 geströmt, bevor dieses geschlossen wird. Wenn die Wegstrecke der Ablassleitung zwischen dem Ablassventil 17 und dem Blasensensor 18 nicht frei wählbar ist, sodass diese den zeitlichen Offset bilden kann, kann ein solcher zeitlicher Offset auch zusätzlich ergänzend oder anstelle eines solchen Wegstücks bei direkter Anordnung des Blasensensors 18 hinter dem Ablassventil 17 entsprechend vorgegeben werden. Dieser Aufbau stellt sicher, dass immer die gesamte Menge an angefallenem Wasser abgelassen wird. Zusätzlich wird eine geringe Gasmenge mit abgelassen, welche typischerweise der Menge an Inertgasen, welche sich angesammelt hat, entsprechen dürfte.

In einer erweiterten Ausführungsform kann über den Blasensensor 18 jedoch auch die Menge an abgelassenem Wasser sehr genau erfasst bzw. ermittelt werden. Hierfür wird eine Druckdifferenz vor und hinter dem Ablassventil 17 entweder gemessen oder ist aufgrund der Betriebsdrücke des Brennstoffzellensystems 1 ohnehin bekannt. Zusammen mit dem bekannten Strömungsquerschnitt im Bereich des Ablassventils 17 kann dann aus der Zeitdauer zwischen dem Öffnen des Ablassventils 17 und der Detektion des Gases im Bereich des Blasensensors 18, sowie gegebenenfalls der Wegstrecke der Strömung zwischen dem Ablassventil 17 und dem Blasensensor 18, die abgelassene Flüssigkeitsmenge ermittelt werden. Dies kann beispielsweise in der Steuerung 19 erfolgen. Die abgelassene Flüssigkeitsmenge hängt typischerweise mit der von der Brennstoffzelle 2 geforderten Leistung zusammen und kann sich beispielsweise bei einem zeitgesteuerten Öffnen des Ablassventils 17 je nach dynamischen Anforderungen, welche an die Brennstoffzelle 2 gerichtet worden sind, stark variieren. Typischerweise hängt neben der Menge des entstandenen Wassers jedoch auch die Menge des entstandenen Inertgases von derartigen Parametern ab. Anhand der entstandenen Menge an Wasser, welche sich in der oben beschriebenen Art durch die Ablasszeit ermitteln lässt, kann nun einfach auf die Menge des in der Rezirkulationsleitung 12 und dem Anodenbereich 3 angefallenen Inertgases zurückgeschlossen werden. Wenn die vorgegebene Zeit bis zum Schließen des Ablassventils 17, nachdem das Ereignis in dem Blasensensor 18 detektiert worden ist, also nun in Abhängigkeit der ermittelten Wassermenge vorgegeben wird, dann kann sicher und zuverlässig ein Ablassen des Inertgases sichergestellt werden, ohne dass mehr Wasserstoff als unbedingt notwendig mit abgelassen wird.

Der Aufbau ist dabei besonders einfach und unanfällig gegenüber Verschmutzung und Störung, da der Blasensensor 18 berührungslos arbeitet und mit dem Medienstrom in der Ablassleitung 16 nicht in Berührung kommt. Der Medienstrom kann ihn daher auch nicht verschmutzen, wie es beispielsweise beim Einsatz von kapazitiven Füllstandssensoren der Fall ist.

Alles in allem ermöglicht die Rezirkulationseinrichtung 14 in der beschriebenen Art sowie das beschriebene Verfahren zum Ablassen von Flüssigkeit und/oder Gasen aus dem Bereich der Rezirkulationseinrichtung 14 damit einen einfachen und effizienten Aufbau, welcher sicher und zuverlässig arbeitet und entsprechend kostengünstig realisiert werden kann. Ein Brennstoffzellensystem 1 mit einer derartigen Rezirkulationseinrichtung 14 kann daher vorzugsweise in hochbelasteten Systemen, welche hochdynamisch betrieben werden und aufgrund hoher Stückzahlen kostengünstig verfügbar sein müssen, eingesetzt werden. Eine bevorzugte Anwendung ist die Verwendung des Brennstoffzellensystems 1 in einem Kraftfahrzeug, und hier insbesondere zur Bereitstellung von elektrischer Energie zum Antreiben des Kraftfahrzeugs.

## Patentansprüche

1. Rezirkulationseinrichtung (14) für ein Brennstoffzellensystem (1) mit wenigstens einer mit gasförmigen Edukten betriebenen Brennstoffzelle (2), welche einen Anodenbereich (3) und einen Kathodenbereich (4) aufweist, mit einer Rezirkulationsleitung (12), welche den Ausgang (11) des Anodenbereichs (3) mit dessen Eingang (10) verbindet, mit einem Flüssigkeitsabscheider (15), welcher im Bereich der Rezirkulationsleitung (12) angeordnet ist, und welcher eine Ablassleitung (16) mit einem Ablassventil (17) für Flüssigkeit und/oder Gase aufweist,
**dadurch gekennzeichnet, dass**
im Bereich der Ablassleitung (16) ein Blasensensor (18) zur Steuerung des Ablassventils (17) angeordnet ist.

2. Rezirkulationseinrichtung (14) nach Anspruch 1,
**dadurch gekennzeichnet, dass**
der Blasensensor (18) im Bereich der Ablassleitung (16) in Strömungsrichtung des abgelassenen Volumenstroms nach dem Ablassventil (17) angeordnet ist.

3. Rezirkulationseinrichtung (14) nach Anspruch 1 oder 2,
**dadurch gekennzeichnet, dass**
der Blasensensor (18) als berührungsloser Blasensensor (18), insbesondere als Ultraschallsensor, ausgebildet ist.

4. Rezirkulationseinrichtung (14) nach Anspruch 1, 2 oder 3,
**dadurch gekennzeichnet, dass**
der Blasensensor (18) die Ablassleitung (16) von außen umgibt.

5. Verfahren zum Ablassen von Flüssigkeit und/oder Gasen aus einer Rezirkulationseinrichtung (14) gemäß einem der Ansprüche 1 bis 4,
**dadurch gekennzeichnet, dass**
das Ablassventil (17) geöffnet und dann in Abhängigkeit eines von dem Blasensensor (18) detektierten Ereignisses wieder geschlossen wird.

6. Verfahren nach Anspruch 5
**dadurch gekennzeichnet, dass**
der Blasensensor (18) so kalibriert wird, dass er den Übergang zwischen der abgelassenen Flüssigkeit und dem dieser folgenden abgelassenen Gas detektiert.

7. Verfahren nach Anspruch 5 oder 6,
**dadurch gekennzeichnet, dass**
das Ablassventil (17) zeitverzögert nach dem detektierten Ereignis geschlossen wird.

8. Verfahren nach Anspruch 5, 6 oder 7,
**dadurch gekennzeichnet, dass**
bei bekannter oder gemessener Druckdifferenz und bekanntem Strömungsquerschnitt im Bereich des Ablassventils (17) aus der Zeitdauer zwischen dem Öffnen des Ablassventil (17) und der Detektion des Ereignisses im Bereich des Blasensensors (18) sowie gegebenenfalls der Wegstrecke der Strömung zwischen dem Ablassventil (17) und dem Blasensensor (18) die abgegebene Flüssigkeitsmenge ermittelt wird, wobei eine in Abhängigkeit der abgegebenen Flüssigkeitsmenge vorgegebene Zeit zwischen dem Ereignis und dem Schließen des Ablassventils (17) abgewartet wird.

9. Verfahren nach einem der Ansprüche 5 bis 8,
**dadurch gekennzeichnet, dass**
das Öffnen des Ablassventils (17) zeitgesteuert, in Abhängigkeit von aufsummierten Leistungswerten der Brennstoffzelle oder anhand einer berechneten in der Rezirkulationseinrichtung (14) erwarteten, angefallenen Flüssigkeitsmenge erfolgt.

10. Verwendung der Rezirkulationseinrichtung (14) nach einem der Ansprüche 1 bis 4 und/oder des Verfahrens nach einem der Ansprüche 5 bis 9 in einem Brennstoffzellensystem (1), durch welches in einem Kraftfahrzeug elektrische Leistung, insbesondere für Antriebszwecke, erzeugt wird.

## Claims

1. Recirculation device (14) for a fuel cell system (1) with at least one fuel cell (2) operated with gaseous educts and having an anode region (3) and a cathode region (4), the recirculation device (14) comprising a recirculation line (12) connecting the outlet (11) of the anode region (3) to its inlet (10), and a liquid separator (15), which is located in the region of the recirculation line (12) and comprises a discharge line (16) with a discharge valve (17) for liquid and/or gases,
**characterised in that**
a bubble sensor (18) for the control of the discharge valve (17) is located in the region of the discharge line (16).

2. Recirculation device (14) according to claim 1,
**characterised in that**
the bubble sensor (18) is located in the region of the discharge line (16) downstream of the discharge valve (17) in the direction of flow of the discharged volume flow.

3. Recirculation device (14) according to claim 1 or 2,
**characterised in that**
the bubble sensor (18) is designed as a non-contact bubble sensor (18), in particular as an ultrasonic sensor.

4. Recirculation device (14) according to claim 1, 2 or 3,
**characterised in that**
the bubble sensor (18) externally surrounds the discharge line (16).

5. Method for discharging liquid and/or gases from a recirculation device (14) according to any of claims 1 to 4,
**characterised in that**
the discharge valve (17) is opened and then closed again as a function of an event detected by the bubble sensor (18).

6. Method according to claim 5,
**characterised in that**
the bubble sensor (18) is calibrated such that it detects the transition between the discharged liquid and the discharged gas following the former.

7. Method according to claim 5 or 6,
**characterised in that**
the discharge valve (17) is closed with a time delay after the detected event.

8. Method according to claim 5, 6 or 7,
**characterised in that**
if the pressure differential is known or measured and if the flow cross-section in the region of the discharge valve (17) is known, the discharged liquid quantity is determined from the time elapsed between the opening of the discharge valve (17) and the detection of the event in the region of the bubble sensor (18) and, if applicable, from the distance covered by the flow between the discharge valve (17) and the bubble sensor (18), with a waiting time predetermined as a function of the discharged liquid quantity between the event and the closing of the discharge valve (17).

9. Method according to any of claims 5 to 8,
**characterised in that**
the discharge valve (17) is opened in a time-controlled manner as a function of summed power values of the fuel cell, or on the basis of a calculated liquid quantity expected in the recirculation device (14).

10. Use of the recirculation device (14) according to any of claims 1 to 5 and/or of the method according to any of claims 5 to 9 in a fuel cell system (1) by which electric power, in particular for drive purposes, is generated in a motor vehicle.

## Revendications

1. Dispositif de recirculation (14) pour un système de pile à combustible (1) doté d'au moins une pile à combustible (2) fonctionnant à l'aide de réactifs gazeux, qui présente une zone d'anode (3) et une zone de cathode (4), d'une conduite de recirculation (12) qui relie la sortie (11) de la zone d'anode (3) à son entrée (10), d'un séparateur de liquide (15), qui est disposé dans la zone de la conduite de recirculation (12), et qui présente une conduite d'évacuation (16) dotée d'une soupape d'évacuation (17) pour le liquide et/ou les gaz, **caractérisé en ce que** dans la zone de la conduite d'évacuation (16) est disposé un capteur de bulles (18) destiné à piloter la soupape d'évacuation (17).

2. Dispositif de recirculation (14) selon la revendication 1, **caractérisé en ce que** le capteur de bulles (18) est disposé dans la zone de la conduite d'évacuation (16) dans le sens d'écoulement du débit volumétrique évacué en aval de la soupape d'évacuation (17).

3. Dispositif de recirculation (14) selon la revendication 1 ou la revendication 2, **caractérisé en ce que** le capteur de bulles (18) est conçu comme un capteur de bulles sans contact (18), en particulier comme un capteur ultrasons.

4. Dispositif de recirculation (14) selon la revendication 1 ou la revendication 2 ou 3, **caractérisé en ce que** le capteur de bulles (18) entoure la conduite d'évacuation (16) à partir de l'extérieur.

5. Procédé d'évacuation de liquide et/ou de gaz provenant d'un dispositif de recirculation (14) selon l'une quelconque des revendications 1 à 4, **caractérisé en ce que** la soupape d'évacuation (17) s'ouvre et ensuite se referme en fonction d'un événement détecté par le capteur de bulles (18).

6. Procédé selon la revendication 5, **caractérisé en ce que** le capteur de bulles (18) est étalonné de manière qu'il détecte la transition entre le liquide évacué et le gaz évacué qui le suit.

7. Procédé la revendication 5 ou la revendication 6, **caractérisé en ce que** la fermeture de la soupape d'évacuation (17) est retardée après l'événement détecté.

8. Procédé selon la revendication 5 ou la revendication 6 ou 7, **caractérisé en ce qu'**en cas de différence de pression connue ou mesurée et de section de passage reconnu dans la zone de la soupape d'évacuation (17) à partir de la durée de temps d'ouverture de la soupape d'évacuation (17) et la détection de l'événement dans la zone du capteur de bulles (18) ainsi qu'éventuellement du parcours de l'écoulement entre la soupape d'évacuation (17) et le capteur de bulles (18) la quantité de liquide générée est déterminée, un temps prédéfini en fonction de la quantité de liquide générée entre l'événement et la fermeture de la soupape d'évacuation (17) étant temporisé.

9. Procédé selon l'une quelconque des revendications 5 à 8, **caractérisé en ce que** l'ouverture de la soupape d'évacuation (17) s'effectue par temporisation en fonction des valeurs de puissance totalisées de la pile à combustible ou à l'aide d'une quantité de liquide obtenue, attendue, calculée dans le dispositif de recirculation (14).

10. Utilisation du dispositif de recirculation (14) selon l'une quelconque des revendications 1 à 4 et/ou procédé selon l'une quelconque des revendications 5 à 9 dans un système de pile à combustible (1) qui permet de produire dans un véhicule automobile une puissance électrique, en particulier l'énergie motrice.
